(19) **Europäisches Patentamt / European Patent Office / Office européen des brevets**

(11) **EP 4 359 936 B1**

(12) **EUROPEAN PATENT SPECIFICATION**

(45) Date of publication and mention
of the grant of the patent:
**06.11.2024 Bulletin 2024/45**

(21) Application number: **22786241.4**

(22) Date of filing: **12.09.2022**

(51) International Patent Classification (IPC):
**G06F 12/123** *(2016.01)*    **G06F 12/0864** *(2016.01)*
**G06F 12/126** *(2016.01)*    **G06F 12/128** *(2016.01)*

(52) Cooperative Patent Classification (CPC):
**G06F 12/123; G06F 12/0864; G06F 12/126;
G06F 12/128**

(86) International application number:
**PCT/US2022/076285**

(87) International publication number:
**WO 2024/058801 (21.03.2024 Gazette 2024/12)**

(54) **TIME-EFFICIENT IMPLEMENTATION OF CACHE REPLACEMENT POLICY**

ZEITEFFIZIENTE IMPLEMENTIERUNG EINER CACHE-ERSATZRICHTLINIE

MISE EN OEUVRE RAPIDE D'UNE POLITIQUE DE REMPLACEMENT DE MÉMOIRE CACHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.05.2024 Bulletin 2024/18**

(73) Proprietor: **Google LLC
Mountain View, CA 94043 (US)**

(72) Inventors:
• **SEELAM, Ganesh Manikanta Sai Pavan Kumar
Mountain View
California 94043 (US)**
• **KASHYAP, Raj Shekhar
Mountain View
California 94043 (US)**

(74) Representative: **Marks & Clerk GST
1 New York Street
Manchester M1 4HD (GB)**

(56) References cited:
| | |
|---|---|
| WO-A1-02/093386 | WO-A1-2016/097805 |
| WO-A1-2016/097806 | WO-A1-2016/097812 |
| US-A1- 2003 135 696 | US-A1- 2004 215 888 |
| US-A1- 2009 144 503 | US-A1- 2010 275 044 |
| US-A1- 2013 297 876 | US-A1- 2014 143 499 |
| US-A1- 2015 052 312 | US-A1- 2015 193 355 |
| US-A1- 2015 248 354 | US-A1- 2018 349 292 |
| US-A1- 2020 301 840 | US-A1- 2020 371 932 |

**Description**

BACKGROUND

This specification relates to systems having integrated circuit devices.

A cache is a device that stores data retrieved from memory or data to be written to memory for one or more different hardware devices in a system. The hardware devices can be different components integrated into a system on a chip (SOC). In this specification, the devices that provide read requests and write requests through caches will be referred to as client devices. Some caches service memory requests for multiple different client devices integrated into a single system.

Caches can be used to reduce power consumption by reducing overall requests to the main memory. In addition, as long as client devices can access the data they need in the cache, power can further be saved by placing the main memory as well as data paths to the main memory in a low-power state. Therefore, cache usage is correlated with overall power consumption, and increasing cache usage results in a decrease in overall power consumption. Therefore, devices that rely on battery power, e.g., mobile computing devices, can extend their battery life by increasing cache usage for the integrated client devices.

A cache placement policy determines how a memory block is placed in the cache. For a set-associative cache, a least recently used (LRU) replacement policy can be used. In conventional LRU replacement implementations, a system fits all the cache replacement operations in the same clock cycle for a transaction. However, because the execution time for most of the operations in the LRU replacement policy increases with the number of cache lines in a set of the cache, it can be challenging to fit all the operations for the transaction into a single clock cycle for a set-associative cache with high associativity. US 2020/0371932 A1 describes a first cache storage, a second cache storage, wherein the second cache storage includes a first portion operable to store a first set of data evicted from the first cache storage and a second portion, a cache controller coupled to the first cache storage and the second cache storage and operable to receive a write operation, determine that the write operation produces a miss in the first cache storage, and in response to the miss in the first cache storage, provide write miss information associated with the write operation to the second cache storage for storing in the second portion. US 2020/301840 A1 describes a method which determines to generate a prefetch request, obtains a confidence value for target data associated with the prefetch request, writes the target data into a set of the n-way set associative cache memory, modifies an n-position array of the cache memory, such that a particular one of n array positions identifies one of the n ways, wherein the particular one of the n LRU array positions is determined by the confidence value.

SUMMARY

This specification describes a cache system including multiple sets of cache lines and replacement logic configured to implement a two-stage least recently used (LRU) replacement policy. By performing the LRU replacement in two stages, the cache system overcomes some limitations of conventional LRU replacement implementations, and improves the time efficiencies for performing multiple cache transactions.

In one particular aspect of the specification, a cache system is provided. The cache system includes multiple sets with each set having multiple respective ways, and replacement logic configured to implement a two-stage least recently used (LRU) replacement computation. The two-stage LRU replacement computation causes the cache to perform: a first stage during which the cache computes an LRU way for a set, and a second stage during which the cache updates an LRU data structure with information of a transaction accessed way.

In some implementation of the cache system, the cache is configured to perform the two-stage LRU replacement computation in consecutive clock cycles.

In some implementation of the cache system, the cache is configured to implement an LRU replacement policy using the computed LRU way.

In some implementation of the cache system, the replacement logic comprises a plurality of nodes storing respective way values for each set, and wherein performing the second stage comprises shifting the way values stored between the nodes for the set.

In some implementation of the cache system, to perform the second stage, the cache system is configured to update each node for a set with data the node already stores or data shifted from another node.

In some implementation of the cache system, when performing the first stage for a current transaction, in response to a hazard condition resulted from the second stage of a previous transaction being performed on a same particular set, the cache system performs hazard resolution for the current transaction.

In some implementation of the cache system, performing the hazard resolution for the current transaction includes: in response to determining that all of the respective ways in the particular set are eligible for replacement, determining the LRU way for the current transaction based on the LRU data structure after the LRU data structure has been updated for the previous transaction.

In some implementation of the cache system, the replacement logic is configured to, in response to determining that not all of the respective ways in the particular set are eligible for replacement: determining hazard-resolved eligible nodes from the plurality of nodes; selecting an eligible node from the hazard-resolved eligible nodes; and determining the LRU way using the way value stored in the selected eligible node.

In some implementation of the cache system, the replacement logic is configured to start determining the hazard-resolved eligible nodes from the plurality of nodes before the second stage of the previous transaction has been completed.

In some implementation of the cache system, determining the hazard-resolved eligible nodes from the plurality of nodes includes: generating un-resolved node data that identifies eligible nodes from the plurality of nodes based on eligible ways and the LRU data structure before the LRU data structure been updated by the second stage of the previous transaction; and shifting the un-resolved node data using shift information generated during the second stage of the previous transaction to generate hazard-resolved node data that identifies the hazard-resolved eligible nodes.

In another aspect of the present specification, a method for performing LRU replacement computation is provided. The method is performed by the cache system described above and includes the operations described above.

The subject matter described in this specification can be implemented in particular implementations so as to realize one or more advantages. For example, in some implementations, by performing the two-stage LRU replacement policy in two consecutive clock cycles, the cache system improves the time efficiencies for performing multiple cache transactions. Further, in some implementations, when a hazard results between the current transaction and the previous transaction, the system can start the hazard resolution process for the current transaction before the LRU update of the previous transaction has been finished, to minimize the time impact of hazard resolution. The increased timing efficiency can help implement advanced LRU replacement policy for set-associative caches with high associativity numbers.

The details of one or more embodiments of the subject matter described in this specification are set forth in the accompanying drawings and the description below. Other features, aspects, and advantages of the subject matter will become apparent from the description, the drawings, and the claims. Aspects of the disclosed subject matter are set out in the appended independent claims. Advantageous embodiments are defined by the appended dependent claims.

BRIEF DESCRIPTION OF THE DRAWINGS

FIG. 1 shows an example of a cache system.

FIG. 2 is a flow chart illustrating an example process for performing a cache transaction.

FIG. 3 illustrates an example process for performing multiple cache transactions.

FIG. 4A shows an example data structure for the LRU data for a set.

FIG. 4B illustrates an example process for updating the LRU data.

FIG. 5 is a flow chart illustrating an example process for performing hazard resolution for a cache transaction.

FIG. 6 shows an example hardware implementation of an LRU cache replacement policy.

FIG. 7 shows an example hardware implementation of a cache hazard resolution.

Like reference numbers and designations in the various drawings indicate like elements.

DETAILED DESCRIPTION

A cache placement policy determines how a memory block is placed in the cache. This specification focuses on the set-associative cache placement policy, where the cache is divided into multiple sets and each set includes multiple cache lines.

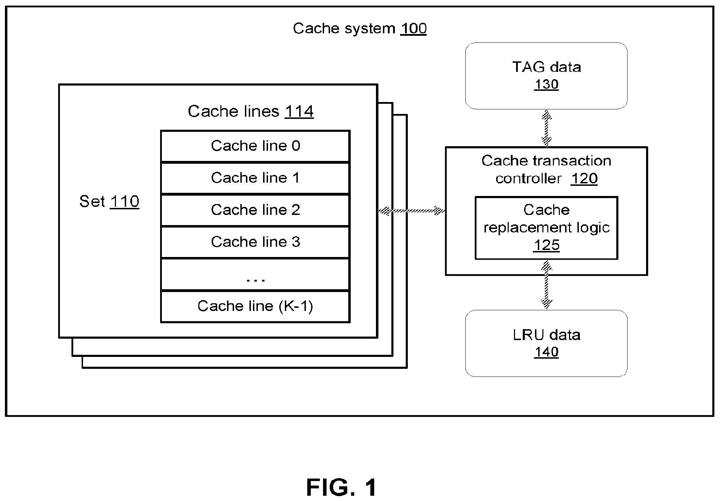

FIG. 1 shows a cache system 100. The cache system 100 may be a part of a processing system, such as a system on a chip (SOC) communicatively coupled to memory devices. In particular, the cache system 100 is a set-associative cache and includes multiple sets 110. Each set 110 includes multiple respective cache lines 114.

A cache line, also known as a way, is the unit of data transfer between the cache and another memory device, e.g., the main memory of the processing system. All cache lines in the set have a fixed size, e.g., 64 bytes. A processor will read or write an entire cache line when any location in the 64-byte region is read or written.

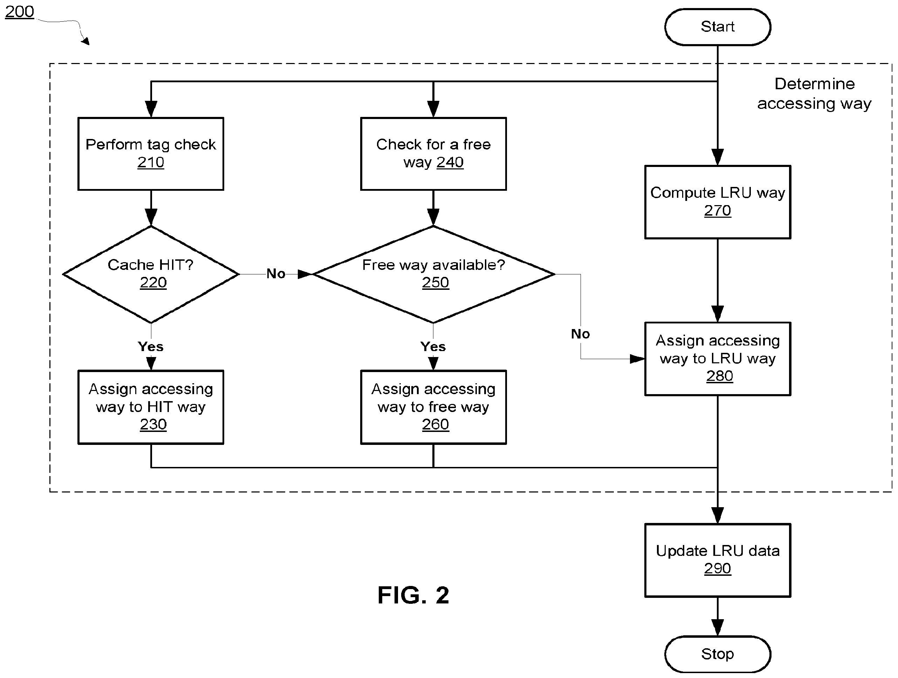

The cache system 100 further includes a cache transaction controller 120 that manages cache transactions of the cache system 100. In this specification, a cache transaction refers to a process of accessing the cache system with a request for a specific memory block. An example cache transaction process will the described with reference to FIG. 2. In general, the cache transaction controller 120 maps the requested memory block to a specific set 110 using the index bits derived from the address of the memory block. The cache transaction controller 120 then performs a tag check to determine whether the requested memory block is already placed in one of the cache lines 110. The tag check is performed based on the tag data 130 that stores the tags of all the cache lines 114 of the memory device. In particular, the cache transaction controller 120 compares the tag bits of the address of the memory block with the tags of the cache lines 114 in the mapped set 110. The tag check returns a "cache hit" if the memory block tag matches any of the cache lines in the mapped set. Otherwise, the tag check returns a "cache miss".

In case of a "cache miss", the cache transaction controller 120 requests the memory block from another memory device, such as from the main memory of the processing system or from the next-level cache of the processing system, and places the memory block in a selected cache line 114 of the mapped set 110. If all the cache lines 114 in the mapped set 110 have already been allocated (i.e., have been previously placed with respective memory blocks), the cache transaction controller 120 uses the new data read from the external memory device to replace the block stored in a cache line identified through a replacement policy.

In particular, the system 100 uses the cache replacement logic 125 to implement a least recently used (LRU) replacement policy that selects the least recently used cache line (out of K-ways) for replacement. This process requires keeping track of the recency of each cache line 114 with respect to the usage of all the other cache lines in a particular set 110. Thus, the system 100 maintains the LRU data 140 that specifies the recency information for each cache line 114 in each set 110 of the system 100.

The cache replacement logic 125 implements the LRU replacement computation in two stages. During the first stage, the cache system 100 determines the least recently used cache line (termed as the LRU way in this application) based at least on the current LRU data 140. The LRU way is selected for replacement. During the second stage, the cache system 100 updates the LRU data 140 based on the information of the transaction accessed way, so the LRU data 140 is up to date for the next transaction.

FIG. 2 illustrates an example process 200 for performing a cache transaction. For convenience, the process 200 will be described as being performed by a cache system, such as the cache system 100 of FIG. 1.

Before performing the process 200, the system has determined the set for the cache transaction. The output of the process 200 specifies a particular cache line (termed as the "accessing way" in this specification) in the set for accessing the memory block specified in the cache transaction request.

After receiving the cache transaction request specifying the memory block, the system performs a tag check in step 210. In particular, the system compares the tag bits associated with the address of the memory block with the tags of the cache lines in the set.

The system determines whether the tag check results in a cache HIT or MISS in step 220. That is, if the tag bits associated with the address of the memory block match the tag of one of the cache lines in the set, the system determines that the tag check result is a cache HIT. For convenience, the cache line that has the tag matching the memory block tag is termed as "HIT way". If the tag bits associated with the address of the memory block do not match any of the tags of the cache lines in the set, the system determines that the tag check result is a MISS.

If the system determines that the tag check result is a cache HIT, the system uses the HIT way for the transaction, and thus assigns the accessing way to the HIT way in step 230.

If the system determines that the tag check result is a cache MISS, this means that the data in the specified memory block has not been loaded into any of the cache lines in the set, and the system needs to request the data from a next level in the memory hierarchy, and load the data into a selected cache line in the set.

The system checks for a cache line in the set that has not been occupied in step 240. For convenience, an unoccupied cache line is termed the "free way". If the system determines that a free way is available in step 250, the system uses the free way for performing the transaction for the cache MISS scenario. That is, the system assigns the accessing way to the free way in step 260.

If the system determines that a free way is not available in step 250, this means that all the cache lines in the set have been occupied, and the system needs to identify a cache line for replacement through the replacement policy, and place the data in the cache line identified for replacement.

Because the system implements the LRU replacement policy, the system computes the LRU way in step 270. The system assigns the accessing way to the LRU way in step 280.

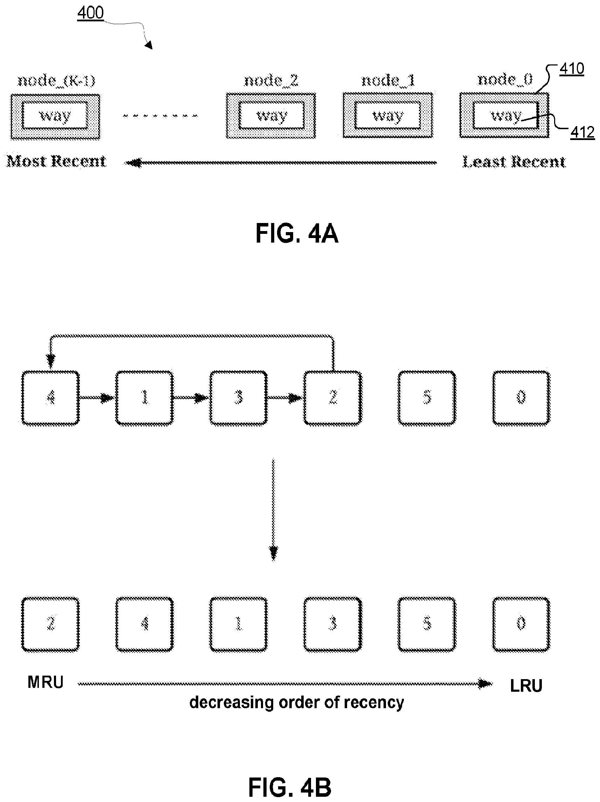

Once the accessing way is determined (by steps 230, 260, or 280), the system updates the LRU data in step 290. The LRU data tracks the recency of the cache lines in the set, i.e., specifies how recently a particular cache line has been accessed for a transaction compared to other cache lines in the set. The update process will be described in more detail with references to FIGs. 4A-6.

In conventional LRU replacement implementations, a system fits all the operations shown in FIG. 2 in the same clock cycle for a transaction. In this case, the time needed for completing these operations can be estimated as:

$$
\begin{aligned}
T_{conventional} = {} & O(\text{determine accessing way}) + O(\text{update LRU data}) \\
= {} & \text{Max}[O(\text{determine hitway}), O(\text{select freeway}), \\
& O(\text{compute LRU way})] + O(\text{update LRU data}) + C
\end{aligned} \tag{1}
$$

Here, 0 (< operation >) denotes the timing depth for completing the <operation>, C is a constant time delay for operations such as selecting one of the HIT way/free way/compute LRU way branches shown in FIG. 2.

Note that each of the three terms O(determine hitway), O(select freeway), and O(compute LRU way) increases when the total number of cache lines in the set increases. That is, the time for determining the accessing way increases with increased cache associativity. When the cache associativity is significant (e.g., when the total number of cache lines in the set exceeds a threshold), it can be challenging to fit all the operations for the transaction into a single clock cycle.

In order to overcome the limitations of conventional LRU replacement implementations, the system described in this specification performs the LRU replacement using a 2-stage scheme. That is, the system implements the two-stage LRU replacement policy in consecutive clock cycles.

In the first stage, the system determines the accessing way. In the second stage, the system updates the LRU data.

Thus, the required time for the first clock cycle is:

$$
\begin{aligned}
T_1 = {} & O(\text{determine accessing way}) \\
= {} & \text{Max}[O(\text{determine hitway}), O(\text{select freeway}), \\
& O(\text{compute LRU way})] + C
\end{aligned} \tag{2}
$$

The time required for the second clock cycle is:

$$
T_2 = O(\text{Update LRU data}) \tag{3}
$$

By splitting the time required for performing the operations for the transaction into the two clock cycles, the system can generally improve the time efficiencies for performing the cache transaction. For example, after the system has determined the accessing way in the first stage for a particular transaction, instead of waiting for the LRU data update to finish for the particular transaction in the second stage, the system can start the first stage for the next cache transaction, i.e. start determining the accessing way for the next cache transaction while performing the second stage for the particular cache transaction. Thus, second stage of a current transaction and the first stage of the next transaction can be performed in parallel. This scheme generally shortens the total time required for performing the multiple cache transactions.

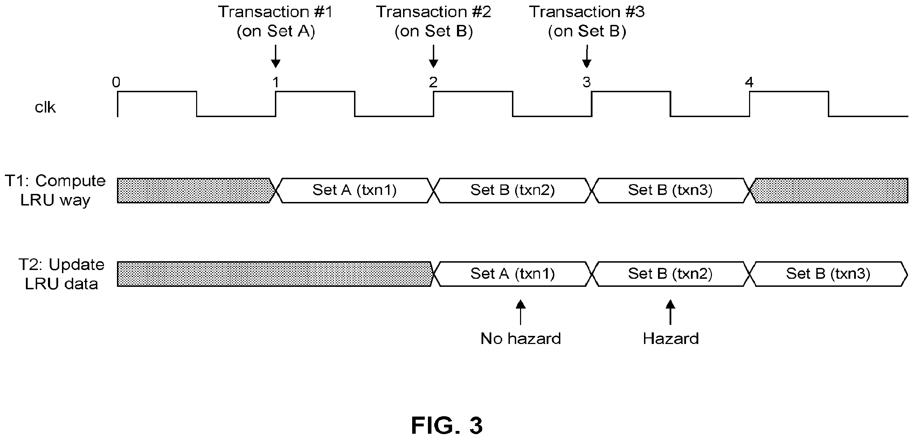

FIG. 3 illustrates clock cycles for performing cache operations for 3 cache transactions. The first transaction (txt 1) is performed on a first set (Set A) in the cache. The second transaction (txt 2) is performed on a second set (Set B) in the cache. The third transaction (txt 3) is also performed on the second set (Set B)

As shown in FIG. 3, at clk = 1, the system performs the first stage of the first transaction. At clk = 2, the system performs the second stage of the first transaction and the first stage of the second transaction. At clk = 3, the system performs the second stage of the second transaction and the first stage of the third transaction.

Note that at clk = 2, the system performs two stages, i.e., the second stage of the first transaction and the first stage of the second transaction, in parallel. This overlap in timing does not result in a hazard since the first and the second transactions are performed on different sets of the cache, i.e., the first transaction being performed on Set A and the second transaction being performed on Set B. In this specification, a hazard refers to a problem with the instruction pipeline when the next instruction cannot correctly execute in the following clock cycle, e.g., due to instructions that exhibit data dependence upon modified data in different stages of a pipeline. Because the first and the second transactions are performed on different sets, there is no data dependence between the two transactions, and hazards do not occur.

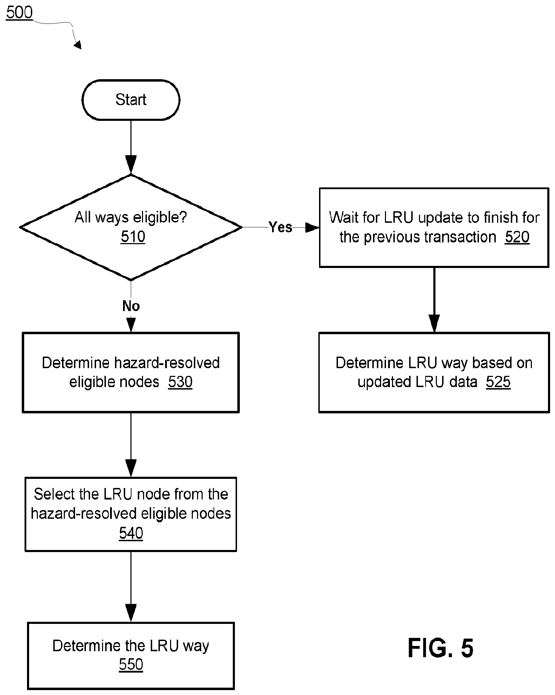

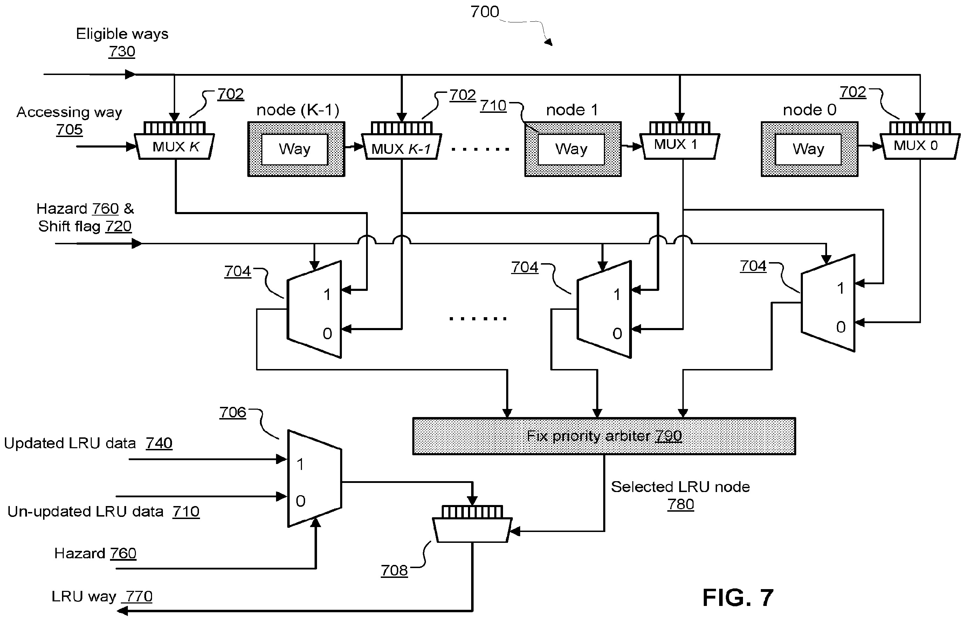

By contrast, the overlap in the timing of the two stages at clk = 3 may result in hazard because both the second and the third transactions are performed on the same set (Set B). In the cycle of clk = 3, the first stage of the third transaction may need to use the LRU data of the set to determine the accessing way (e.g., for computing LRU way), while the LRU data of the same set is being updated in the second stage of the second transaction. This results in a hazard. Therefore, in order to correctly compute the LRU way for the third transaction, the hazard needs to be resolved. Example processes and implementations for resolving the hazard will be described with reference to FIG. 5 and FIG. 7.

FIG. 4A shows an example data structure 400 for storing the LRU data. The data structure includes a sequence of $K$ nodes having one-to-one correspondence to the $K$ cache lines in the set. Each node 410 stores a way value 412 identifying the corresponding cache line. Each node 410 is associated with a respective node index e.g., $k = 0,1, ..., (K - 1)$. The respective node index $k$ of a node 410 specifies the recency of the cache line identified by the way value 412 of the node 410. For example, the cache line identified by the way value stored in the $0^{th}$ node is the least recently accessed cache line in the set, and the cache line identified by the way value stored in the $(k - 1)^{th}$ node is the most recently accessed cache line in the set.

During the processing of updating the LRU data, i.e., during the second stage of a cache transaction, the system updates the LRU data by shifting the way values 412 stored in the sequence of nodes 410.

FIG. 4B illustrates an example process for updating the LRU data stored in a data structure, e.g., in the sequence of nodes shown in FIG. 4A. In FIG. 4B, the top row of nodes store way values before the LRU data update. The bottom row of nodes store way values after the LRU data update. Both rows of nodes are arranged in decreasing order of recency from left to right. That is, the left-most node of each row stores the way value of the most recently used (MRU) cache line, and the right-most node of each row stores the way value of the least recently used (LRU) cache line.

In the example shown in FIG. 4B, the accessing way for the transaction is identified by the way value "2" stored in the 4th node from the left of the top row. The system updates the LRU data to reflect the change in the recency by moving the way value "2" to the MRU node and shifting the way values stored in the 1st through 3rd nodes from the left to the right by one node, resulting in the way values shown in the bottom row.

FIG. 5 shows an example process 500 for performing hazard resolution in LRU computation. For convenience, the process 500 will be described as being performed by a cache system, such as the cache system 100 of FIG. 1.

When the system starts to compute the LRU way for a current transaction, if the current transaction is mapped to the same set that a previous transaction is mapped to, and the previous transaction has been started one clock cycle before the current transaction, data hazard may occur and the system performs the process 500 to resolve the hazard.

As an illustrative example, referring to FIG. 3, when Transaction #3 (txn3) is the current transaction performed on Set B, data hazard may result between computing the LRU way (T1 stage) for txn3 and updating the LRU data (T2 stage) of the previous transaction (txn2) that is also performed on Set B.

Referring back to FIG. 5, in step 510 of the hazard resolution process 500, the system determines if all the cache lines in the set are eligible for replacement. This step is needed because in some scenarios, the cache system can be accessed by multiple client devices. In this specification, a client device is a device that issues read requests and write requests to the cache system to access data of the cache system. When the cache system is being accessed by multiple client devices, each client device may only use a subset of cache lines in the current set for replacement. Thus, for the current transaction associated with a particular client device, only a subset of cache lines are eligible for replacement, and the system can compute the LRU way only from the eligible cache lines.

If the system determines that all the cache lines in the set are eligible for replacement, the system can simply perform step 520 to wait for the LRU update to finish, before performing step 525 to determine the LRU way for the current transaction based on the updated LRU data (that has been updated for the previous transaction). For example, in step 525, the system can simply determine the LRU way that is specified by the way value 412 stored in the LRU node (node 0) of the LRU data 400 as shown in FIG. 4A, where all the LRU data nodes 410 have been updated for the previous transaction. Since the LRU way is selected based on the up-to-date LRU data with regard to the previous transaction, the selected LRU way is hazard resolved.

As an illustrative example, referring to FIG. 3, to resolve the hazard between the current transaction (txn3) and the previous transaction (txn2), when all the cache lines in Set B are eligible for replacement, the system can simply wait for the LRU data update of txn2 in $clk = 3$ to finish before starting computing the LRU way for txn3.

Referring back to FIG. 5, if the system determines that not all the cache lines in the set are eligible for replacement, i.e., only a subset of cache lines in the set are eligible for replacement for the current transaction, the system needs to identify the eligible subset of cache lines before determining the LRU way from the eligible cache lines. Since the recency information of the cache lines can be stored in the respective LRU data nodes (e.g., as shown in FIG. 4A), the system can determine the eligible cache lines by determining the eligible set of LRU data nodes, and using the respective stored way values 412 stored in the eligible LRU data nodes to identify the eligible cache lines. Here, an eligible LRU data nodes refers to an LRU data node that stores a way value identifying an eligible cache line.

Since the process 500 is performed for the current transaction during the same clock cycle when the previous transaction is updating the LRU data, to correctly identify the eligible ways, the system needs to determine the hazard-resolved eligible nodes in step 530. Here, a hazard-resolved eligible node refers to an LRU data node that stores an up-to-date way value that identifies an eligible cache line. The up-to-date way value refers to the way value that is consistent with the updated LRU data from the previous transaction.

In some implementations, in order to improve time efficiency, the system starts the step of determining the hazard-resolved eligible nodes for the current transaction before the LRU data update is completed for the previous transaction. This can be achieved by directly using the node shift information of updating the LRU data in the previous transaction. The node shift information specifies, for each node of the LRU data for the current set, whether the node is shifted (or to be shifted) by the LRU data update process for the previous transaction. An example implementation of determining the hazard-resolved eligible nodes in a time-efficient manner will be described with reference to FIG. 7.

After the hazard-resolved eligible nodes have been determined in step 530, the system selects the LRU node from the hazard-resolved eligible nodes in step 540. The selected LRU node is the least recently used node among the set of hazard-resolved eligible nodes. In step 550, the system determines the LRU way using the way value stored in the selected LRU node.

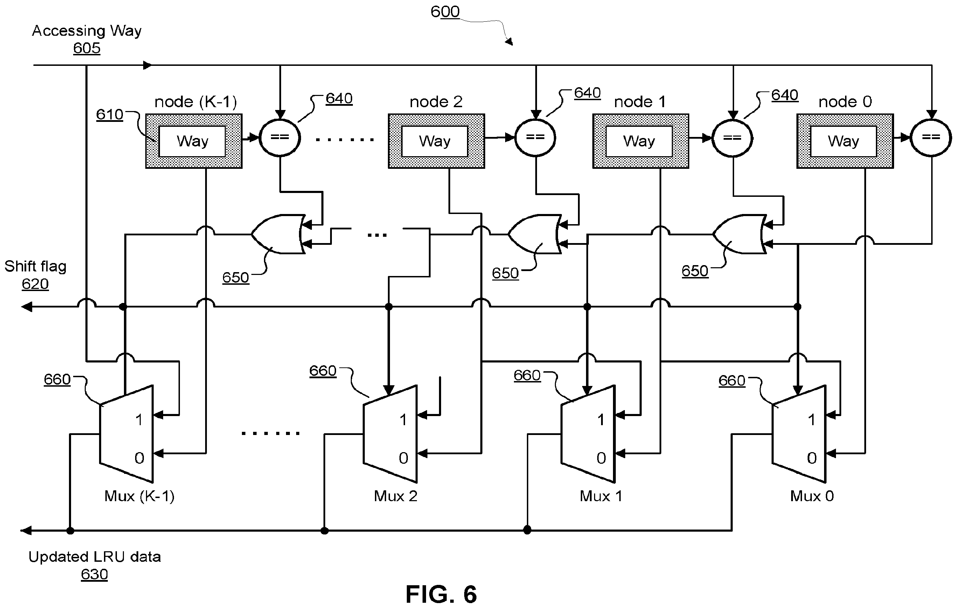

FIG. 6 shows an example hardware implementation 600 of an LRU cache replacement policy applied to the LRU data (i.e., respective way values for the cache lines in the set) stored in a sequence of nodes 640. Similar to the data structure shown in FIG. 4, the sequence of K nodes 610 are arranged according to the recency (with decreasing recency from left to right) of the cache lines identified by the respective way values stored in the nodes. That is, in the example shown in FIG. 6, the leftmost node, i.e., node $(K - 1)$, stores the way value of the MRU cache line while the rightmost node, i.e., node 0, stores the way value of the LRU cache line.

The circuit 600 includes a plurality of comparators 640, a plurality of OR gates 650, and a plurality of multiplexers 660. The circuit receives as an input the accessing way 605 determined by the first stage of the cache transaction, and compares the accessing way 605 with each of the way values stored in the nodes 610 using a respective comparator 640. The output of the comparator 650 is connected to a first input to a respective logic OR gate 650.

For the convenience of description and without loss of generality, the way value stored in node $k$ is compared with the accessing way 605 using the $k^{th}$ comparator 640, where $k = 0,1,2, ..., (K - 1)$. The OR gate is present for the $k^{th}$ nodes, where $k = 1, 2, 3, ... (K - 1)$. For $k > 1$, the output of the $k^{th}$ comparator 640 is connected to the first input of the $k^{th}$ OR gate, and the second input of the $k^{th}$ OR gate is connected to the output of the $(k - 1)^{th}$ OR gate. For $k = 1$, the output of the $k^{th}$ comparator 640 is connected to the first input of the $k^{th}$ OR gate, and the second input of the $k^{th}$ OR gate is connected to the output of the $(k - 1)^{th}$ comparator. That is, the OR gate performs OR operation to the comparison results for the current node (node Zc) and all preceding nodes (nodes 0, 1, ... $k - 1$). If one of the nodes 0, 1, ... $k$ stores the way value that matches the accessing way 605, the $k^{th}$ OR gate outputs "1". If none of the nodes 0, 1, ..., $k$ stores the way value that matches the accessing way 605, the $k^{th}$ OR gate outputs "0".

The output of the $k^{th}$ OR gate is connected to the control input of a respective multiplexer 660 (MUX Zc). Here, $k = 1, 2, ..., (K - 1)$. The control input of the rightmost multiplexer (MUX 0) is connected to the comparison result for node 0. The data inputs of MUX $k$ are connected to the current node (node $k$) and the next node (node $(k + 1)$), respectively, with $k = 0, ..., (K - 2)$. The data inputs of the leftmost multiplexer (MUX $(k - 1)$) are connected to node $(K - 1)$ and the accessing way input, respectively. Thus, the multiplexers 660 output the updated LRU data 630, i.e., the way values that have been shifted according to the control inputs of the multiplexers 660.

The circuit 600 further outputs the control inputs of the multiplexers 660 as the shift flag signal 620. The shift flag signal 620 includes a respective flag value for each particular LRU data node 610 for indicating whether a shift operation has been performed (or is to be performed) to the way value stored in the particular LRU data node 610. As described with reference to FIG. 7, the system can use the shift flag signal 620 for performing hazard resolution between two transactions.

FIG. 7 shows an example hardware implementation 700 for cache hazard resolution between the current cache transaction and previous cache transaction. In particular, the circuit 700 performs hazard resolution when the second stage (for LRU data update) of the previous cache transaction and the first stage (for LRU way computation) of the current cache transaction are being performed in the same clock cycle, as illustrated in the clk = 3 cycle of FIG. 3, during which the previous transaction (txn2) performs the LRU data update and the current transaction (txn3) performs the LRU way computation.

Referring back to FIG. 7, the circuit 700 receives several input signals, including: (1) the eligible ways 730 identifying the cache lines that are eligible for replacement in the set for the current transaction; (2) the accessing way 705 for the previous transaction; (3) the shift flag 720 outputted by the previous transaction and specifies shift information for the LRU data nodes for the LRU data update in the previous transaction; (4) the updated LRU data 740 that specifies the way values that have been updated by the previous transaction; (5) the un-updated LRU data 710 that specifies the way values that have not been updated by the previous transaction; and (6) the hazard flag 760 that indicates whether to perform hazard resolution between the previous transaction and the current transaction. The circuit 700 outputs the LRU way 770 computed for the current transaction.

Note that the input signals 705, 720, and 730 can be available for the current transaction before the LRU data update process has been completed for the previous transaction. Thus, the data processing using these input signals can be started for the current transaction before the LRU data update process has been completed for the previous transaction.

The circuit 700 includes a plurality of $K \times 1$ multiplexers 702, including MUX 0, MUX 1, ..., MUX K. Each $K \times 1$ multiplexer 702 receives the eligible ways 730 as the inputs. The eligible ways 730 can be encoded into "1" or "0" flags in a K-length vector for the $K$ cache lines in the set, where a "1" flag indicates that the corresponding way is eligible for replacement and a "0" flag indicates that the corresponding way is not eligible for replacement. Each of MUX 0, ... , MUX (K - 1) also obtains the way values from the respective LRU data nodes 710 as the control input. Note that way values received by the multiplexers MUX 0, ... , MUX (K - 1) are outdated way values, i.e., way values that have not been updated by the second stage (T2) of the pervious transaction. The multiplexer MUX K receives the accessing way 705 as the second input. The outputs of the multiplexer 702 specify the un-resolved eligible LRU data nodes that have not been hazard-resolved. That is, the output of a multiplexer 702 specifies whether a corresponding node stores an outdated way value identifying one of the eligible cache lines. The outdated way value refers to the way value that has not been updated by the LRU data update process of the previous transaction.

The circuit 700 includes a plurality of multiplexers 704 that receive the shift flag signal 720 as control signal. The data inputs of each multiplexer 704 are connected to the outputs of two adjacent $K \times 1$ multiplexer 702. Thus, the multiplexers 704 performs data shifting on the un-resolved eligible LRU data nodes based on the shift flag 720 when there is a hazard. The hazard signal 760 indicates that the two transactions are performed to the same set i.e., there is hazard. Since the shift flag 720 has been outputted by the previous transaction and specifies shift information for the LRU data nodes for the previous transaction, the multiplexers 704 performs the same data shifting on the un-resolved eligible LRU data nodes as being performed by the previous transaction on the LRU data nodes. Thus, the outputs of the multiplexers 704 specify the hazard-resolved LRU data nodes.

The circuit 700 includes a fix priority arbiter 790 that performs a fixed priority arbitration among the hazard-resolved eligible nodes and select the LRU node 780, i.e., the least recently used node as indicated by the node indexes, among the hazard-resolved eligible nodes. The circuit 700 can use another $K \times 1$ multiplexer 708 receives the selected LRU node 780 as the control signal to select the LRU way 770 from the updated LRU data 740 or the un-updated LRU data 710, depending on the hazard signal 760.

As described above, the circuit 700 is configured to perform hazard resolution on the eligible LRU data nodes for the current transaction at least in part in parallel with the LRU data update process of the previous transaction. Thus, the time required for determining the accessing way in the first stage with hazard resolution can be estimated as:

$$T_1 = \text{Max}[O(\text{determine hitway}), O(\text{select freeway}), \\ O(\text{compute LRU way}) + C2] + C \qquad (4)$$

where C2 is a constant small time delay for performing additional operations such as performing data shifting on the un-resolved eligible nodes.

Compared to the conventional implementation of the LRU replacement policy, the above-described implementation provides a time saving of:

$$\Delta T = T_{\text{conventional}} - T_1 >= O(\text{ update LRU data }) - C2 \qquad (5)$$

Since the time for updating the LRU data increases with cache associativity, the time saving as indicated by Eq. (5) can be significant for set-associative caches having a large number of cache lines in each set.

As shown by the above analysis, by using the cache replacement process described with references to FIG. 2, FIG. 3, and FIG. 6, and the hazard resolution process described with references to FIG. 5 and FIG. 7, the described cache system can overcome certain limitations of conventional LRU replacement implementations, and improve the time efficiencies for performing multiple cache transactions.

Embodiments of the subject matter and the functional operations described in this specification can be implemented in digital electronic circuitry, in tangibly-embodied computer software or firmware, in computer hardware, including the structures disclosed in this specification, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. Embodiments of the subject matter and the functional operations described in this specification can be implemented in digital electronic circuitry, in tangibly-embodied computer software or firmware, in computer hardware, including the structures disclosed in this specification, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A cache (100) comprising:

   multiple sets (110) with each set having multiple respective ways (114); and
   replacement logic (125) configured to implement a two-stage least recently used (LRU) replacement computation, wherein the two-stage LRU replacement computation causes the cache to perform operations comprising:

   a first stage during which the cache computes an LRU way for a set, and
   a second stage during which the cache updates an LRU data structure (140) with information of a transaction accessed way;
   **characterized in that**
   performing the first stage for a current transaction comprises:
   in response to a hazard condition resulted from the second stage of a previous transaction being performed on a same particular set, performing hazard resolution (500) for the current transaction.

2. The cache of claim 1, wherein the cache is configured to perform the two-stage LRU replacement computation in consecutive clock cycles.

3. The cache of claim 1, wherein the cache is configured to implement an LRU replacement policy using the computed LRU way.

4. The cache of claim 1, wherein the replacement logic (125) comprises a plurality of nodes storing respective way values for each set (110), and wherein performing the second stage comprises shifting the way values stored between the nodes for the set.

5. The cache of claim 4, wherein performing the second stage comprises updating each node for a set (110) with data the node already stores or data shifted from another node.

6. The cache of claim 1, wherein performing the hazard resolution for the current transaction comprises:
   in response to determining that all of the respective ways (114) in the particular set (110) are eligible for replacement, determining the LRU way for the current transaction based on the LRU data structure (140) after the LRU data structure has been updated for the previous transaction.

7. The cache of claim 1, wherein the replacement logic (125) is configured to, in response to determining that not all of the respective ways (110) in the particular set are eligible for replacement: determining hazard-resolved eligible nodes from the plurality of nodes;

   selecting an eligible node from the hazard-resolved eligible nodes; and
   determining the LRU way using the way value stored in the selected eligible node.

8. The cache of claim 7, wherein the replacement logic (125) is configured to start determining the hazard-resolved eligible nodes from the plurality of nodes before the second stage of the previous transaction has been completed and optionally, wherein determining the hazard-resolved eligible nodes from the plurality of nodes comprises:

generating un-resolved node data that identifies eligible nodes from the plurality of nodes based on eligible ways and the LRU data structure before the LRU data structure been updated by the second stage of the previous transaction; and

shifting the un-resolved node data using shift information generated during the second stage of the previous transaction to generate hazard-resolved node data that identifies the hazard-resolved eligible nodes.

9. A method for performing LRU replacement computation for a cache including multiple sets (110) with each set having multiple respective ways (114):

computing (270) an LRU way for a set during a first stage; and
updating (290) an LRU data structure with information of a transaction accessed way during a second stage;

wherein performing the first stage for a current transaction comprises:
in response to a hazard condition resulted from the second stage of a previous transaction being performed on a same particular set, performing hazard resolution for the current transaction.

10. The method of claim 9, wherein the first stage and the second stage are performed in consecutive clock cycles.

11. The method of claim 9, wherein the cache is configured to implement an LRU replacement policy using the computed LRU way.

12. The method of claim 9, wherein:

the method further comprises: storing respective way values for each set (110) in a plurality of nodes; and
performing the second stage comprises shifting the way values stored between the nodes for the set and optionally, wherein performing the second stage comprises updating each node for a set with data the node already stores or data shifted from another node.

13. The method of claim 9, wherein performing the hazard resolution for the current transaction comprises:
in response to determining that all of the respective ways (114) in the particular set are eligible for replacement, determining the LRU way for the current transaction based on the LRU data structure (140) after the LRU data structure has been updated for the previous transaction.

14. The method of claim 9, wherein performing the hazard resolution for the current transaction comprises, in response to determining that not all of the respective ways (114) in the particular set are eligible for replacement:

determining hazard-resolved eligible nodes from the plurality of nodes;
selecting an eligible node from the hazard-resolved eligible nodes; and
determining the LRU way using the way value stored in the selected eligible node.

15. The method of claim 14, wherein determining hazard-resolved eligible nodes comprises: start determining the hazard-resolved eligible nodes from the plurality of nodes before the second stage of the previous transaction has been completed and optionally, wherein determining the hazard-resolved eligible nodes comprises:

generating un-resolved node data that identifies eligible nodes from the plurality of nodes based on eligible ways (114) and the LRU data structure (140) before the LRU data structure been updated by the second stage of the previous transaction; and
shifting the un-resolved node data using shift information generated during the second stage of the previous transaction to generate hazard-resolved node data that identifies the hazard-resolved eligible nodes.

**Patentansprüche**

1. Cache (100), umfassend:

mehrere Sätze (110), wobei jeder Satz mehrere jeweilige Wege (114) aufweist; und
Ersetzungslogik (125), die dazu konfiguriert ist, eine zweistufige LRU-Ersetzungsberechnung (least recently used, LRU) zu implementieren, wobei die zweistufige LRU-Ersetzungsberechnung den Cache veranlasst, Vorgänge durchzuführen, die Folgendes umfassen:

eine erste Phase, während der der Cache einen LRU-Weg für einen Satz berechnet, und
eine zweite Phase, während der der Cache eine LRU-Datenstruktur (140) mit Informationen über eine Transaktion, auf die zugegriffen wurde, aktualisiert;
**dadurch gekennzeichnet, dass** Durchführen der ersten Phase für eine aktuelle Transaktion Folgendes umfasst:
als Reaktion auf eine Gefahrenbedingung, die sich aus der zweiten Phase einer vorherigen Transaktion ergibt, die mit demselben bestimmten Satz durchgeführt wurde, Durchführen der Gefahrenauflösung (500) für die aktuelle Transaktion.

2. Cache nach Anspruch 1, wobei der Cache dazu konfiguriert ist, die zweistufige LRU-Ersetzungsberechnung in aufeinanderfolgenden Taktzyklen durchzuführen.

3. Cache nach Anspruch 1, wobei der Cache dazu konfiguriert ist, eine LRU-Ersetzungsrichtlinie unter Verwendung des berechneten LRU-Weges zu implementieren.

4. Cache nach Anspruch 1, wobei die Ersetzungslogik (125) eine Vielzahl von Knoten umfasst, die jeweilige Wegwerte für jeden Satz (110) speichern, und wobei das Durchführen der zweiten Phase das Verschieben der zwischen den Knoten gespeicherten Wegwerte für den Satz umfasst.

5. Cache nach Anspruch 4, wobei das Durchführen der zweiten Phase Aktualisieren jedes Knotens für einen Satz (110) mit Daten, die der Knoten bereits speichert, oder mit von einem anderen Knoten verschobenen Daten umfasst.

6. Cache nach Anspruch 1, wobei das Durchführen der Gefahrenauflösung für die aktuelle Transaktion Folgendes umfasst:
als Reaktion auf Bestimmen, dass alle jeweiligen Wege (114) in dem bestimmten Satz (110) für eine Ersetzung in Frage kommen, Bestimmen des LRU-Weges für die aktuelle Transaktion basierend auf der LRU-Datenstruktur (140), nachdem die LRU-Datenstruktur für die vorherige Transaktion aktualisiert worden ist.

7. Cache nach Anspruch 1, wobei die Ersetzungslogik (125) zu Folgendem konfiguriert ist, als Reaktion auf das Bestimmen, dass nicht alle der jeweiligen Wege (110) in dem bestimmten Satz für eine Ersetzung in Frage kommen:

Bestimmen von gefährdungsaufgelösten geeigneten Knoten aus der Vielzahl von Knoten;
Auswählen eines geeigneten Knotens aus den gefährdungsaufgelösten geeigneten Knoten; und
Bestimmen des LRU-Weges unter Verwendung des Wegwertes, der in dem ausgewählten geeigneten Knoten gespeichert ist.

8. Cache nach Anspruch 7, wobei die Ersetzungslogik (125) dazu konfiguriert ist, mit dem Bestimmen der gefährdungsaufgelösten in Frage kommenden Knoten aus der Vielzahl von Knoten zu beginnen, bevor die zweite Phase der vorherigen Transaktion erfüllt ist, und optional, wobei das Bestimmen der gefährdungsaufgelösten in Frage kommenden Knoten aus der Vielzahl von Knoten Folgendes umfasst:

Erzeugen von nicht aufgelösten Knotendaten, die geeignete Knoten aus der Vielzahl von Knoten basierend auf geeigneten Wegen und der LRU-Datenstruktur identifizieren, bevor die LRU-Datenstruktur durch die zweite Phase der vorherigen Transaktion aktualisiert wurde; und
Verschieben der nicht aufgelösten Knotendaten unter Verwendung der während der zweiten Phase der vorherigen Transaktion erzeugten Verschiebungsinformationen, um gefahraufgelöste Knotendaten zu erzeugen, die die gefahraufgelösten in Frage kommenden Knoten identifizieren.

9. Verfahren zum Durchführen einer LRU-Ersatzberechnung für einen Cache, der mehrere Sätze (110) beinhaltet, wobei jeder Satz mehrere jeweilige Wege (114) aufweist:

Berechnen (270) eines LRU-Weges für einen Satz während einer ersten Phase; und
Aktualisierung (290) einer LRU-Datenstruktur mit Informationen über eine Transaktion, auf die in einer zweiten Phase zugegriffen wurde;
wobei das Durchführen der ersten Phase für eine aktuelle Transaktion Folgendes umfasst:

als Reaktion auf eine Gefahrenbedingung, die sich aus der zweiten Phase einer vorherigen Transaktion ergibt, die mit demselben bestimmten Satz durchgeführt wurde, Durchführen der Gefahrenauflösung für die aktuelle Transaktion.

10. Verfahren nach Anspruch 9, wobei die erste Phase und die zweite Phase in aufeinanderfolgenden Taktzyklen durchgeführt werden.

11. Verfahren nach Anspruch 9, wobei der Cache dazu konfiguriert ist, eine LRU-Ersetzungspolitik unter Verwendung des berechneten LRU-Weges zu implementieren.

12. Verfahren nach Anspruch 9, wobei:
das Verfahren ferner Folgendes umfasst: Speichern jeweiliger Wegwerte für jeden Satz (110) in einer Vielzahl von Knoten; und wobei das Durchführen der zweiten Phase das Verschieben der zwischen den Knoten für den Satz gespeicherten Wegwerte umfasst und optional, wobei das Durchführen der zweiten Phase das Aktualisieren jedes Knotens für einen Satz mit Daten, die der Knoten bereits speichert, oder mit von einem anderen Knoten verschobenen Daten umfasst.

13. Verfahren nach Anspruch 9, wobei das Durchführen der Gefahrenauflösung für die aktuelle Transaktion Folgendes umfasst:
als Reaktion auf Bestimmen, dass alle jeweiligen Wege (114) in dem bestimmten Satz für eine Ersetzung in Frage kommen, Bestimmen des LRU-Weges für die aktuelle Transaktion basierend auf der LRU-Datenstruktur (140), nachdem die LRU-Datenstruktur für die vorherige Transaktion aktualisiert worden ist.

14. Verfahren nach Anspruch 9, wobei das Durchführen der Gefahrenauflösung für die aktuelle Transaktion Folgendes umfasst, als Reaktion auf das Bestimmen, dass nicht alle der jeweiligen Wege (114) in dem bestimmten Satz für einen Austausch in Frage kommen:

Bestimmen von gefährdungsaufgelösten geeigneten Knoten aus der Vielzahl von Knoten;
Auswählen eines geeigneten Knotens aus den gefährdungsaufgelösten geeigneten Knoten; und
Bestimmen des LRU-Weges unter Verwendung des Wegwertes, der in dem ausgewählten geeigneten Knoten gespeichert ist.

15. Verfahren nach Anspruch 14, wobei das Bestimmen von gefährdungsaufgelösten geeigneten Knoten Folgendes umfasst: Beginnen des Bestimmens der gefährdungsaufgelösten in Frage kommenden Knoten aus der Vielzahl von Knoten, bevor die zweite Phase der vorherigen Transaktion erfüllt ist, und optional, wobei
das Bestimmen der gefährdungsaufgelösten geeigneten Knoten Folgendes umfasst:

Erzeugen von nicht aufgelösten Knotendaten, die geeignete Knoten aus der Vielzahl von Knoten basierend auf geeigneten Wegen (114) und der LRU-Datenstruktur (140) identifizieren, bevor die LRU-Datenstruktur durch die zweite Phase der vorherigen Transaktion aktualisiert wurde; und
Verschieben der nicht aufgelösten Knotendaten unter Verwendung der während der zweiten Phase der vorherigen Transaktion erzeugten Verschiebungsinformationen, um gefahraufgelöste Knotendaten zu erzeugen, die die gefahraufgelösten in Frage kommenden Knoten identifizieren.

## Revendications

1. Mémoire cache (100) comprenant :

plusieurs ensembles (110), chaque ensemble ayant plusieurs voies (114) respectives ; et
une logique de remplacement (125) configurée pour mettre en œuvre un calcul de remplacement du moins récemment utilisé (LRU) en deux étapes, dans laquelle le calcul de remplacement LRU en deux étapes amène la mémoire cache à réaliser des opérations comprenant :

une première étape au cours de laquelle la mémoire cache calcule une voie LRU pour un ensemble, et
une seconde étape au cours de laquelle la mémoire cache met à jour une structure de données LRU (140) avec des informations d'une voie d'accès transactionnelle ;
**caractérisée en ce que** la réalisation de la première étape pour une transaction en cours comprend :

en réponse à une condition de danger résultant du fait que la seconde étape d'une transaction précédente est réalisée sur un même ensemble particulier, la réalisation d'une résolution de danger (500) pour la transaction en cours.

2.  Mémoire cache selon la revendication 1, dans laquelle la mémoire cache est configurée pour réaliser le calcul de remplacement LRU en deux étapes dans des cycles d'horloge consécutifs.

3.  Mémoire cache selon la revendication 1, dans laquelle la mémoire cache est configurée pour mettre en œuvre une politique de remplacement LRU à l'aide de la voie LRU calculée.

4.  Mémoire cache selon la revendication 1, dans laquelle la logique de remplacement (125) comprend une pluralité de noeuds stockant des valeurs de voie respectives pour chaque ensemble (110), et dans laquelle la réalisation de la seconde étape comprend le décalage des valeurs de voie stockées entre les noeuds pour l'ensemble.

5.  Mémoire cache selon la revendication 4, dans laquelle la réalisation de la seconde étape comprend la mise à jour de chaque noeud pour un ensemble (110) avec des données que le nœud stocke déjà ou des données décalées d'un autre nœud.

6.  Mémoire cache selon la revendication 1, dans laquelle la réalisation de la résolution de danger pour la transaction en cours comprend :
    en réponse à la détermination du fait que toutes les voies (114) respectives dans l'ensemble particulier (110) sont éligibles au remplacement, la détermination de la voie LRU pour la transaction en cours sur la base de la structure de données LRU (140) après que la structure de données LRU a été mise à jour pour la transaction précédente.

7.  Mémoire cache selon la revendication 1, dans laquelle la logique de remplacement (125) est configurée pour, en réponse à la détermination du fait que les voies (110) respectives dans l'ensemble particulier ne sont pas toutes éligibles pour le remplacement :

    la détermination de noeuds éligibles résolus en cas de danger parmi la pluralité de nœuds ;
    la sélection d'un noeud éligible parmi les noeuds éligibles résolus en cas de danger ; et
    la détermination de la voie LRU à l'aide de la valeur de voie stockée dans le noeud éligible sélectionné.

8.  Mémoire cache selon la revendication 7, dans laquelle la logique de remplacement (125) est configurée pour commencer à déterminer les nœuds éligibles résolus en cas de danger parmi la pluralité de nœuds avant que la seconde étape de la transaction précédente ne soit terminée et éventuellement, dans laquelle la détermination des nœuds éligibles résolus en cas de danger parmi la pluralité de nœuds comprend :

    la génération de données de noeud non résolues qui identifient des nœuds éligibles parmi la pluralité de nœuds sur la base de voies éligibles et de la structure de données LRU avant que la structure de données LRU ne soit mise à jour par la seconde étape de la transaction précédente ; et
    le décalage des données de noeud non résolues à l'aide d'informations de décalage générées au cours de la seconde étape de la transaction précédente pour générer des données de noeud résolues en cas de danger qui identifient les noeuds éligibles résolus en cas de danger.

9.  Procédé permettant de réaliser un calcul de remplacement LRU pour une mémoire cache comportant plusieurs ensembles (110), chaque ensemble ayant plusieurs voies (114) respectives :

    le calcul (270) d'une voie LRU pour un ensemble au cours d'une première étape ; et
    la mise à jour (290) d'une structure de données LRU avec des informations d'une voie d'accès transactionnelle au cours d'une seconde étape ;
    dans lequel la réalisation de la première étape pour une transaction en cours comprend :
    en réponse à une condition de danger résultant du fait que la seconde étape d'une transaction précédente est réalisée sur un même ensemble particulier, la réalisation d'une résolution de danger pour la transaction en cours.

10. Procédé selon la revendication 9, dans lequel la première étape et la seconde étape sont réalisées dans des cycles d'horloge consécutifs.

11. Procédé selon la revendication 9, dans lequel la mémoire cache est configurée pour mettre en œuvre une politique de remplacement LRU à l'aide de la voie LRU calculée.

12. Procédé selon la revendication 9, dans lequel :

le procédé comprend également : le stockage de valeurs de voie respectives pour chaque ensemble (110) dans une pluralité de nœuds ; et
la réalisation de la seconde étape comprend le décalage des valeurs de voie stockées entre les nœuds pour l'ensemble et éventuellement, dans lequel la réalisation de la seconde étape comprend la mise à jour de chaque nœud pour un ensemble avec des données que le noeud stocke déjà ou des données décalées d'un autre nœud.

13. Procédé selon la revendication 9, dans lequel la réalisation de la résolution de danger pour la transaction en cours comprend :
en réponse à la détermination du fait que toutes les voies (114) respectives dans l'ensemble particulier sont éligibles au remplacement, la détermination de la voie LRU pour la transaction en cours sur la base de la structure de données LRU (140) après que la structure de données LRU a été mise à jour pour la transaction précédente.

14. Procédé selon la revendication 9, dans lequel la réalisation de la résolution de danger pour la transaction en cours comprend, en réponse à la détermination du fait que les voies (114) respectives dans l'ensemble particulier ne sont pas toutes éligibles pour le remplacement :

la détermination de noeuds éligibles résolus en cas de danger parmi la pluralité de noeuds ;
la sélection d'un noeud éligible parmi les noeuds éligibles résolus en cas de danger ; et
la détermination de la voie LRU à l'aide de la valeur de voie stockée dans le noeud éligible sélectionné.

15. Procédé selon la revendication 14, dans lequel la détermination de noeuds éligibles résolus en cas de danger comprend :

le fait de commencer la détermination des noeuds éligibles résolus en cas de danger parmi la pluralité de noeuds avant que la seconde étape de la transaction précédente ne soit terminée et éventuellement, dans lequel la détermination des noeuds éligibles résolus en cas de danger comprend :

la génération de données de noeud non résolues qui identifient des noeuds éligibles parmi la pluralité de noeuds sur la base de voies éligibles (114) et de la structure de données LRU (140) avant que la structure de données LRU ne soit mise à jour par la seconde étape de la transaction précédente ; et
le décalage des données de noeud non résolues à l'aide d'informations de décalage générées au cours de la seconde étape de la transaction précédente pour générer des données de noeud résolues en cas de danger qui identifient les noeuds éligibles résolus en cas de danger.

EP 4 359 936 B1

**FIG. 1**

200

Determine accessing way

Start

Perform tag check 210

Cache HIT? 220 — Yes → Assign accessing way to HIT way 230

Cache HIT? 220 — No

Check for a free way 240

Free way available? 250 — Yes → Assign accessing way to free way 260

Free way available? 250 — No

Compute LRU way 270 → Assign accessing way to LRU way 280

Update LRU data 290

Stop

**FIG. 2**

EP 4 359 936 B1

Transaction #1
(on Set A)

Transaction #2
(on Set B)

Transaction #3
(on Set B)

clk

T1: Compute
LRU way

Set A (txn1) | Set B (txn2) | Set B (txn3)

T2: Update
LRU data

Set A (txn1) | Set B (txn2) | Set B (txn3)

No hazard

Hazard

**FIG. 3**

400

node_(K-1)                          node_2        node_1        node_0 ⌐410

| way |     - - - - - - -     | way |       | way |       | way |
⌐412

Most Recent  ◄─────────────────────────────────►  Least Recent

# FIG. 4A

| 4 | → | 1 | → | 3 | → | 2 |     | 5 |     | 0 |

| 2 |     | 4 |     | 1 |     | 3 |     | 5 |     | 0 |

MRU ═══════════════════════════════════════► LRU

**decreasing order of recency**

# FIG. 4B

500

Start

All ways eligible?
510

Yes → Wait for LRU update to finish for the previous transaction 520

No

Determine hazard-resolved eligible nodes 530

Determine LRU way based on updated LRU data 525

Select the LRU node from the hazard-resolved eligible nodes 540

Determine the LRU way 550

FIG. 5

FIG. 6

600

Accessing Way
605

node 0
node 1
node 2
node (K-1)

Way
640
610

== 640

650

Shift flag
620

Mux 0
Mux 1
Mux 2
Mux (K-1)
660

1 0

Updated LRU data
630

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200371932 A1
- US 2020301840 A1